# EUROPEAN PATENT APPLICATION

(11) **EP 3 560 760 A1**
(43) Date of publication of application: **30.10.2019**
(21) Application number: 18465523.1
(22) Date of filing: 27.04.2018
(51) Int. Cl.: B60R 1/06, B60R 1/062, B60R 11/04

(54) **DIGITAL MIRROR CAMERA ARM FOLDING MECHANISM USING GEARS**

(71) Applicant: Continental Automotive GmbH, 30165 Hannover (DE)
(72) Inventor: Stoian, Liviu Achim, 300238 Timisoara (RO)

(57) **Abstract**

The invention provides a camera mounting device (1) for a digital mirror system of a vehicle (2). The camera mounting device (1) comprises an actuator (10, 40), a fixed gear (20), a mobile gear (21), a linking element (22), comprising a first end and a second end and a pivotable camera arm (30), comprising a first end and a second end. The actuator (10, 40) is coupled to the first end of the linking element (22) . The first end of the linking element (22) is configured to rotate around a first rotation axis (15). The second end of the linking element (22) is connected to the mobile gear (21), wherein the first end of the camera arm (30) is fixedly connected to the mobile gear (21). The fixed gear (20) is fixed and is in contact with the mobile gear (21), wherein the mobile gear (21) is configured to rotate around the first rotation axis (15) and a second rotation axis (25), guided by the linking element (22), thereby moving along a contour of the fixed gear.

## Description

The invention relates to a camera mounting device, a digital mirror system and a vehicle comprising the camera mounting device and/or the digital mirror system.

Development in the automotive industry is increasingly moving towards the digitization of systems. One of the systems to be digitized may be the vehicle mirrors (side mirrors and/or rear-view mirror) . The mirror may be replaced by a digital mirror system, comprising a camera and/or one display element. In addition to advantages in aerodynamics and fuel consumption, other technical improvements may be achieved with the digital mirror system. For example, images from several cameras may be combined to form a surround view system, distortions or image effects may be filtered and blinding the driver by other vehicles may be avoided. In conjunction with additional advanced driving assistance systems, the digital mirror system may be used to warn the driver from other vehicles approaching from behind or at a blind spot. However, the digital mirror system may be designed robust or retractable, as it defines the width of the vehicle and may be the first part of the vehicle being hit by an obstacle.

It may be an object to provide a pivotable mounting for a camera.

The object is solved by the subject matter of the independent claims, wherein further embodiments are incorporated in the dependent claims.

A first aspect provides a camera mounting device for a digital mirror system of a vehicle. The camera mounting device comprises an actuator, a fixed gear, a mobile gear, a linking element, comprising a first end and a second end, and a pivotable camera arm, comprising a first end and a second end. The actuator is coupled to the first end of the linking element. The first end of the linking element is configured to rotate around a first rotation axis. The second end of the linking element is connected to the mobile gear, wherein the first end of the camera arm is fixedly connected to the mobile gear. The fixed gear is fixed and is in contact with the mobile gear, wherein the mobile gear is configured to rotate or move around the first rotation axis and a second rotation axis, guided by the linking element, thereby moving along a contour of the fixed gear.

Thus, the camera mounting device may provide a foldable or retractable digital mirror system, which may extend or retract a camera arm equipped with a camera. Further, the camera arm may be extended or retracted automatically by the means of an actuator comprising a drive unit, such as an electric motor, a pneumatic drive or a hydraulic drive. The actuator may be coupled to the first end of the linking element and may be configured to drive the linking element to rotate around a first rotation axis. The second end of the linking element may be coupled to the mobile gear, which is fixedly coupled to the first end of the camera arm. In other words, the mobile gear may be arranged at the first end of the camera arm and may form a part of the latter. The connection, for example via a bearing, between the second end of the linking element and the mobile gear form the second rotation axis. Further, the fixed gear is fixed and arranged in the camera mounting device, such that the linking element rotates over or under the fixed gear. Further, the fixed gear may be in contact with the mobile gear, such that the mobile gear rotates around the first rotation axis and, guided by the linking element, also rotates around the second rotation axis, thereby moving along the contour of the fixed gear. Thus, the camera arm may rotate around the first rotation axis and the second rotation axis, wherein the second rotation axis rotates around the first rotation axis. The camera mounting device may be advantageous for automatically retracting the camera arm during parking or when passing through narrow spaces.

It should be noted that the shape of the contour of the fixed gear as well as of the mobile gear may be circled, semi-circled or cam shaped. Further, the fixed gear as well as the mobile gear may comprise a plurality of corresponding teeth along their contour, which may engage into each other to enhance the force transmission between the fixed gear and the mobile gear.

Further, to protect the actuator from a counterforce introduced into the camera arm, the actuator and the camera arm may be (indirectly) coupled over a linking element and may comprise a friction area. The friction area may be arranged between the fixed gear and the mobile gear (If the fixed gear and the mobile gear are not comprising teeth), and may allow slip between the fixed gear and mobile gear, if the counterforce exceeds a predefined threshold. Furthermore, the friction area may allow slip if the camera arm abuts against an end stopper, which may be provided within the camera mounting device. Thus, the actuator may be prevented from overheating or counterforces by having the friction area.

The linking element and the camera arm may have different rotation axis, e.g. the first rotation axis and the second rotation axis, wherein the two rotation axes are not equal. The linking element may rotate around the first rotation axis and the camera arm may rotate around the first and the second rotation axis. In an embodiment, the first rotation axis is parallel to the second rotation axis but spaced apart from the latter.

It should be noted that the actuator may comprise a drive unit, e.g. a motor, and a transmission element, e.g. a gear arrangement or a worm shaft.

Further, it should be noted that the camera mounting device might comprise additional components, for example a position sensor, a control module and/or a housing. The housing may be connected to the body of the vehicle and/or be formed at least partially by the body of the vehicle. Further, the camera arm may extend through the housing.

Furthermore, the width of the vehicle equipped with the camera mounting device may be reduced to drive through narrow spaces by retracting the camera arm by means of the actuator.

According to an embodiment, the actuator comprises a transmission element, wherein the transmission element is one of a worm shaft, a timing belt, a chain, a wire, a friction wheel, a gear, a spur-gear or a cam.

By the use of a worm shaft the arrangement may be arranged space saving in the camera mounting device and/or the housing thereof. Further, the worm shaft may have a self-locking characteristic, such that it further protects the drive unit from being rotated by an introduced force into the camera arm.

Alternatively or in addition, two gear wheel may engage into each other, wherein one of the gear wheels is arranged at the drive unit and the other gear wheel is arranged at the transmission element and/or the transmission element itself is a gear wheel.

According to an embodiment, the fixed gear and the mobile gear each comprise a plurality of corresponding teeth along their contour.

Thus, the force and/or the movement along the contour of the fixed gear may be better transferred if each one of the fixed gear as well as the mobile gear comprise a plurality of corresponding teeth along their contour, which engage into each other.

According to another embodiment, the fixed gear and the mobile gear comprise a circular or a semi-circular shaped contour.

Thus, for an easy crawling of the mobile gear over the fixed gear, the fixed gear and the mobile gear may comprise a circular or semi-circular contour.

According to a further embodiment, the fixed gear and the mobile gear comprise a corresponding cam shape.

Alternatively, to the semi-circular shaped contour, the fixed gear as well as the mobile gear may comprise a contour shaped as corresponding cams. Thus, a more complex and/or space saving movement of the camera arm may be realised by using cam shaped contours for the fixed gear and the mobile gear.

According to an embodiment, the first rotation axis is parallel to the second rotation axis. Further, the first rotation axis is spaced apart from the second rotation axis by a predefined distance, defined by the linking element.

Since the first rotation axis and the second rotation axis are not the same and are parallel to each other, they are spaced apart from each other by a predefined distance. The distance may be constant and may be defined by the linking element. In particular, the distance is defined by the distance of the two connection points of the linking element. It should be further noted, that the second rotation axis rotates around the first rotation axis.

According to an embodiment, the camera mounting device further comprises a position sensor, which is configured to detect an actual position of the camera arm.

Thus, the position sensor may detect the position of the camera arm and/or the angle between the camera arm and the longitudinal axis of the vehicle, i.e. if the camera arm is extended, retracted or anywhere in between. Further, the position sensor may also detect the actual position of the camera arm, if an obstacle has hit the camera arm and therefore, the camera arm pivoted around the second rotation axis, since the friction area allowed slip.

According to a further embodiment, the camera mounting device further comprises a control module. The control module is configured to control the actuator according to the actual position of the camera arm detected by the position sensor.

Thus, the actual position of the camera arm may be used to control the drive unit and/or the actuator to extend or to retract the camera arm. The control of the drive unit and/or the actuator may be performed by the control module according to the position detected by the position sensor.

According to an embodiment, the actuator comprises a drive unit and the drive unit is one of an electric motor, a pneumatic drive or a hydraulic drive.

According to another aspect, a digital mirror system is provided. The digital mirror system comprises a camera and the above and hereinafter described camera mounting device. The camera is arranged at a second end of the camera arm of the camera mounting device, which is opposite to the mobile gear. Further, the camera faces to the side and/or backwards, when the digital mirror system is mounted to a vehicle (in view of the orientation of the vehicle).

According to yet another aspect of the invention, a vehicle comprising the above and hereinafter described camera mounting device and/or the digital camera system is provided.

The vehicle may, for example, be a motor vehicle, such as a car, bus or truck, but also a ship, a boat, an aircraft or a helicopter.

The above aspects and examples will become apparent from and be elucidated with reference to the embodiments described hereinafter.

Exemplary embodiments will be described in the following with reference to the following drawings, which are diagrammatic and not to scale:
Fig. 1 shows a top view of a digital mirror system in an extended position according to an embodiment.
Fig. 2 shows a top view of a digital mirror system in a retracted position according to an embodiment.
Fig. 3 shows a vehicle with a camera mounting device according to an embodiment.

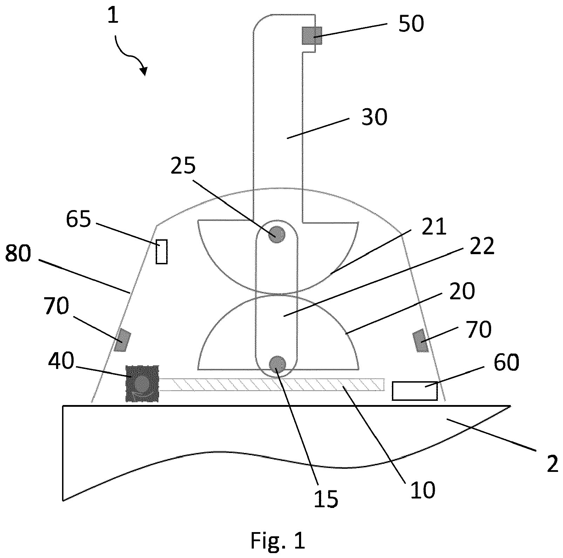

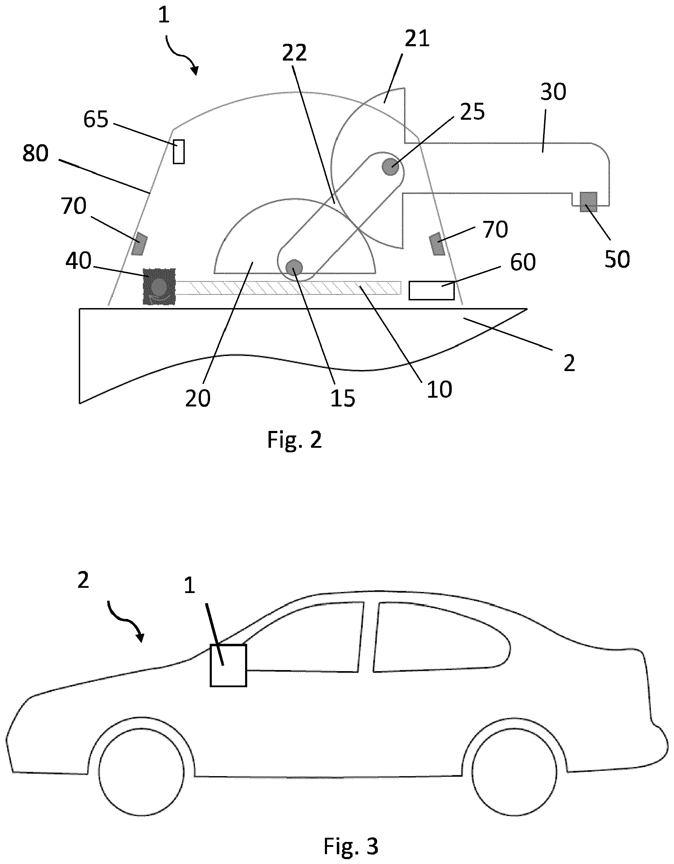

Figs. 1 and 2 show a top view of a digital mirror system for a vehicle 2. The digital mirror system comprises a camera 50 and a camera mounting device 1. The camera mounting device 1 comprises an actuator 10, 40, a fixed gear 20, a mobile gear 21, a linking element 22 and a pivotable camera arm 30. Each one of the linking element 22 and the camera arm 30 comprise a first end and a second end. The actuator 10, 40 may comprise a transmission element 10 and a drive unit 40, which may be an electric motor, a pneumatic drive or a hydraulic drive. The drive unit 40 is coupled to the transmission element 10 and is configured to drive the transmission element 10. The transmission element 10 may be a worm shaft, a timing belt, a chain, a wire, a friction wheel, a gear, a spur-gear and/or a cam, even if a worm shaft is shown in Figs. 1 and 2.

The actuator 10, 40, in particular the transmission element 10, is coupled to the first end of the linking element 22, and is configured to drive the linking element 22 to rotate or pivot around a first rotation axis 15. The second end of the linking element 22 is coupled, for example via a bearing, to the mobile gear 21. The connection between the second end of the linking element 22 and the mobile gear 21 form a second rotation axis 25. The first end of the camera arm 30 is fixedly connected to the mobile gear 21. The fixed gear 20 is fixed and arranged underneath or over the linking element 22. Thus, the linking element 22 rotates over or under the surface of the fixed gear 20. Further, the fixed gear 20 is in contact with the mobile gear 21. Furthermore, the mobile gear 21, and thus also the camera arm 30, is configured to rotate or pivot around the second rotation axis 25 and the first rotation axis 15. The movement of the mobile gear 21 along the contour of the fixed gear 20 is guided by the linking element 22. The camera arm 30 may be extracted (pointing away from the vehicle 2) or retracted (close to the vehicle 2). It should be noted that the first rotation axis 15 and the second rotation axis 25 are not equal to each other. Further, in Figs. 1 and 2 the first rotation axis 15 and the second rotation axis 25 are parallel to each other and spaced apart from each other by a predefined distance, wherein the predefined distance is defined by the linking element 22. In other words, the drive unit 40 drives the transmission element 10 and the transmission element 10 forces the linking element 22 to rotate around the first rotation axis 15, which leads to a rotation of the mobile gear 21 along the contour of the fixed gear 20. Thus, the drive unit 40 indirectly drives or pivots the camera arm 30 to retract or to extend (in view of a vehicle to which the digital mirror system belongs).

The fixed gear 20 and the mobile gear 21 may comprise a smooth contour, forming a friction area between the two elements. Thus, if a counterforce is introduced into the camera arm 30, the mobile gear 21 slips and folds away. Alternatively or in addition, each one of the fixed gear 20 and the mobile gear 21 may comprise a plurality of corresponding teeth, which engage into each other, to allow an enhanced power transmission between the fixed gear 20 and the mobile gear 21. In a first embodiment, the contour each one of the fixed gear 20 and the mobile gear 21 may be shaped circular or semi-circular, but is not limited thereto. In a second embodiment, the contour each one of the fixed gear 20 and the mobile gear 21 may shaped like corresponding cams. Thus, allowing are more complex and/or space saving movement of the camera arm 30.

Further, end stoppers 70 are shown in Figs. 1 and 2, these end stoppers 70 may define the end positions of the camera arm 30, such that the camera arm 30 does not abuts against the vehicle 2.

The digital mirror system may further comprise a position sensor 65 and/or a control module 60. The position sensor 65 may be configured to detect the actual position of the camera arm 30 between the two end stoppers 70. Thus, with the position sensor 65 it may be determined if the camera arm 30 is extended, retracted or in between. The control module 60 may be configured to control the drive unit 40 to drive the transmission element 10. Further, the control module 60 may control the drive unit 40 according to the actual position of the camera arm 30 detected by the position sensor 65.

Furthermore, the camera mounting device 1 may comprise a camera 50 to form a digital mirror system. The camera 50 of the digital mirror device 1 may face sideward and/or backward. The camera mounting device 1 is connected to the body of the vehicle 2 and/or the vehicle 2 forms a part of a housing 80 of the camera mounting device 1. Further, the camera mounting device 1 may be pivotable to reduce the width of the vehicle 2 equipped with the camera mounting device 1. In particular, during parking of the vehicle 2 and/or when driving through a narrow street. It should be noted that the camera mounting device 1 might also comprise a housing 80, which enclose the components of the camera mounting device 1, i.e. to protect these from environmental influences. Further, the body of the vehicle 2 may form a part of the housing 80.

Fig. 1 shows the digital mirror system in an extended position, in which the digital mirror system normally operates during driving of the vehicle 2. Thus, the camera 50 is facing backwards to observe the traffic besides and/or behind the vehicle 2.

Fig. 2 shows the digital mirror device in a retracted position, in which the digital mirror system may be during parking of the vehicle 2 or if the vehicle 2 drives through a narrow street. Further, it is clear to the skilled person, that the camera arm 30 pivots around the second rotation axis 25 and the first rotation axis 15, wherein the first rotation axis 15 is different from the second rotation axis 25 and the second rotation axis 25 rotates around the first rotation axis 15.

Fig. 3 shows a vehicle 2 with a camera mounting device 1 or a digital mirror system. Advantageously the camera mounting device 1 is arranged at or close to the windscreen pillar of the vehicle 2, analogue to contemporary driving mirrors. The camera mounting device 1 may comprise a camera to form a digital mirror system, such that the driver of the vehicle is able to observe the area behind and/or besides the vehicle 2. Further, the camera mounting device 1 may comprise a pivotable camera arm, which is configured to rotate or pivot around a second rotation axis, such that the camera of the digital mirror system retracts or extends from the vehicle 2.

## Claims

1. A camera mounting device (1) for a digital mirror system of a vehicle (2), comprising:
- an actuator (10, 40);
- a fixed gear (20);
- a mobile gear (21);
- a linking element (22), comprising a first end and a second end; and
- a pivotable camera arm (30), comprising a first end and a second end,
wherein the actuator (10, 40) is coupled to the first end of the linking element (22),
wherein the first end of the linking element (22) is configured to rotate around a first rotation axis (15),
wherein the second end of the linking element (22) is connected to the mobile gear (21),
wherein the first end of the camera arm (30) is fixedly connected to the mobile gear (21),
wherein the fixed gear (20) is fixed and is in contact with the mobile gear (21),
wherein the mobile gear (21) is configured to rotate around the first rotation axis (15) and a second rotation axis (25), guided by the linking element (22), thereby moving along a contour of the fixed gear.

2. The camera mounting device (1) according to claim 1,
wherein the actuator (10, 40) comprises a worm shaft, a timing belt, a chain, a wire, a friction wheel, a gear, a spur-gear or a cam.

3. The camera mounting device (1) according to claims 1 or 2,
wherein the fixed gear and the mobile gear each comprise a plurality of corresponding teeth along their contour.

4. The camera mounting device (1) according to any of the preceding claims,
wherein the fixed gear and the mobile gear comprise a semi-circular shaped contour.

5. The camera mounting device (1) according to any of the preceding claims,
wherein the fixed gear and the mobile gear comprise a corresponding cam shape.

6. The camera mounting device (1) according to any one of the preceding claims,
wherein the first rotation axis (15) is parallel to the second rotation axis (25), and
wherein the first rotation axis (15) is spaced apart from the second rotation axis (25) by a predefined distance, defined by the linking element (22).

7. The camera mounting device (1) according to any one of the preceding claims,
further comprising a position sensor (65), which is configured to detect an actual position of the camera arm (30) .

8. The camera mounting device (1) according to claim 7, further comprising a control module (60),
wherein the control module (60) is configured to control the actuator (10, 40) according to the actual position of the camera arm (30) detected by the position sensor (65).

9. The camera mounting device (1) according to any one of the preceding claims,
wherein the actuator (10, 40) comprises one of an electric motor, a pneumatic drive or a hydraulic drive.

10. A digital mirror system, comprising:
a camera (50); and
a camera mounting device (1) according to any one of the preceding claims,
wherein the camera (50) is arranged at the second end of the camera arm (30) of the camera mounting device (1), which is opposite to the mobile gear(21), and
wherein the camera (50) faces to the side and/or backwards.

11. A vehicle (2) comprising a camera mounting device (1) according to any one of the claims 1 to 9 and/or a digital mirror system according to claim 10.
